# EUROPÄISCHE PATENTSCHRIFT

(11) **EP 1 239 999 B1**
(45) Veröffentlichungstag und Bekanntmachung des Hinweises auf die Patenterteilung: **03.03.2004**
(21) Anmeldenummer: 00991264.3
(22) Anmeldetag: 22.12.2000
(51) Int. Cl.: B29C 53/08

(54) **VERFAHREN UND VORRICHTUNG ZUM MEHRSTUFIGEN UMFORMEN EINES ROHRES**
METHOD AND APPARATUS FOR FORMING A PIPE IN SEVERAL STEPS
PROCEDE ET APPAREIL PERMETTANT DE MODIFIER LA FORME D'UN TUYAU EN PLUSIEURS ETAPES

(30) Priorität: 24.12.1999 DE 19963056
(43) Veröffentlichungstag der Anmeldung: 18.09.2002
(73) Patentinhaber: REHAU AG + Co, 95111 Rehau (DE)
(72) Erfinder: BAUMGÄRTEL, Christof, 95111 Rehau (DE); KRAUSE, Frank, 95111 Rehau (DE); RIEGEL, Karlheinz, 95111 Rehau (DE)
(86) Internationale Anmeldenummer: PCT/EP2000/013240
(87) Internationale Veröffentlichungsnummer: WO 2001/047689

(56) Entgegenhaltungen:
- WO-A-98/09797
- PATENT ABSTRACTS OF JAPAN vol. 1996, no. 09, 30. September 1996 (1996-09-30) -& JP 08 118471 A (MITSUI PETROCHEM IND LTD;OSAKA GAS CO LTD), 14. Mai 1996 (1996-05-14)

## Beschreibung

Die vorliegende Erfindung bezieht sich auf ein Verfahren zum mehrstufigen Umformen eines Rohres, vorzugsweise eines Kunststoffrohres, dessen im wesentlichen kreisförmiger Ausgangsquerschnitt in einem ersten Schritt durch Umformen des Rohres in einer ersten Verformungsrichtung zumindest einseitig radial abgeflacht und in einem zweiten Schritt in einer zweiten Verformungsrichtung, die im wesentlichen senkrecht zu ersten Verformungsrichtung ist, umgeformt wird, wobei der Endquerschnitt nach dem Umformen einen verringerten Außendurchmesser und zumindest einen nach innen gefalteten Abschnitt aufweist, sowie auf eine Vorrichtung zum Durchführen des Verfahrens.

Ein Verfahren der eingangs genannten Art zum Umformen eines Kunststoffrohres ist z. B. aus der EP 0 301 697 bekannt. Das Rohr wird in bekannter Weise durch einen Extruder hergestellt. Das aus dem Extruder geförderte Rohr weist nach dem Verlassen des Extruders einen kreisförmigen Querschnitt auf. Zum Erzeugen des nach innen gefalteten Abschnitts wird das Rohr zunächst durch mehrere hintereinander angeordnete Formrollenpaare geführt, deren einzelne Formrollen jeweils einander gegenüberliegen. Von den Formrollenpaaren verfügt jeweils eine Formrolle über eine konvexe und die andere über eine konkave Gestaltung. Die konvexe Formrolle dient zum Eindrücken des Rohrquerschnitts, um den nach innen gefalteten Abschnitt zu erzeugen. Die konkave Formrolle nimmt jeweils die Verformungskräfte auf. Das in Förderrichtung erste Formrollenpaar führt zu einem geringfügigen Einfalten des Rohres. In den nachfolgenden Formrollenpaaren wird der nach innen gefaltete Abschnitt in der ersten Verformungsrichtung zunehmend weiter in das Rohr eingedrückt. Während dieses Umformens nimmt der Querschnitt des Rohres jeweils die Kontur der Formrollen an. Das Umformen in dieser ersten Verformungsrichtung läßt das Erzeugen von Hinterschneidungen des nach innen gefalteten Abschnitts nicht zu. Das Rohr wird nach dem Erzielen einer bestimmten Tiefe des eingefalteten Abschnitts auf eine Formgebungsschiene aufgeschoben und entlang dieser geführt, wobei gleichzeitig zwei einander gegenüberliegende Formrollen die Außenseiten des Rohres in der zweiten Verformungsrichtung gegen die Schiene drücken. Dadurch erhält das Rohr seine endgültige Form.

Als problematisch erweist es sich bei diesem Verfahren, daß die Kräfte zum Umformen des Rohres in der ersten Verformungsrichtung eine starke Beanspruchung der Rohrwand im Grund des nach innen gefalteten Abschnitts erzeugen. Dadurch ergibt sich eine ungleichmäßige Wanddickenverteilung über den Rohrumfang. Beim fertiggestellten Rohr ist die Wanddicke im Bereich der stärksten Krümmung des nach innen gefalteten Abschnitts kleiner als bei den diesen benachbarten Abschnitten. Während der Bereich der stärksten Krümmung während des Umformens gereckt wird, sind die benachbarten Bereiche einer starken Druckbeanspruchung ausgesetzt, wodurch sich die Wanddicken in diesem Bereich vergrößern. Die Wanddickenverringerung kann sich nachteilig auf die Festigkeit der fertigen Rohre auswirken.

Zudem erweist es sich bei einem solchen Verfahren als nachteilig, daß eine Vielzahl von hintereinander angeordneten Formrollenpaaren vorgesehen werden muß, die entsprechend der Verformungsstufe des Rohres ausgebildet sein müssen. Das Herstellen solcher Formrollen ist aufwendig. Aufgrund der Vielzahl von hintereinander angeordneten Forrnrollenpaaren benötigt die zum Durchführen des Verfahrens erforderliche Vorrichtung viel Platz. Die aufwendige Formgebung der Formrollen, die Vielzahl der Rollen und der erhöhte Platzbedarf führt zu hohen Kosten bei der Herstellung der Rohre.

Aus der WO 94/12339 ist weiterhin ein Verfahren zum Umformen eines Rohres bekannt, bei dem zur Faltung des vorzugsweise kreisförmigen Ausgangsquerschnitts eine Lanze entlang der Mittelpunktsymmetrielinie des Ausgangsquerschnitts radial seitlich in das Rohr eingedrückt wird. Bei diesem Verfahren entstehen sehr hohe Kräfte in der Rohrwand am Grund des eingefalteten Abschnitts, da die Lanze mit hohen Kräften seitlich eingedrückt werden muß. Dadurch ergibt sich eine ungleichmäßige Wanddickenverteilung über den Rohrumfang.

Aufgabe der Erfindung ist es daher, ein Verfahren und eine Vorrichtung der eingangs genannten Art derart zu verbessern, um eine gleichmäßigere Wanddickenverteilung über den Umfang des fertiggestellten Rohres zu erreichen.

Diese Aufgabe wird erfindungsgemäß durch ein Verfahren gemäß Anspruch 1 und eine Vorrichtung gemäß Anspruch 22 gelöst.

Die Aufgabe wird erfindungsgemäß gelöst durch ein Verfahren der eingangs genannten Art, bei dem nach dem Umformen des Rohres in der ersten Verformungsrichtung das Rohr mit einer Halteeinrichtung und einer diametral gegenüberliegenden Stützeinrichtung in Anlage gebracht wird, wobei die Halteeinrichtung sich mit dem abgeflachten Abschnitt in Anlage befindet, und durch das Umformen in der zweiten Verformungsrichtung sich der abgeflachte Abschnitt von der ersten Halteeinrichtung zum Erzeugen des nach innen gefalteten Abschnitts selbsttätig beabstandet.

Durch das erfindungsgemäße Verfahren ist es möglich, bei gleichmäßigerer Spannungsverteilung in der Rohrwand eine weitgehend gleichmäßige Wanddickenverteilung über den Rohrumfang zu erreichen. Durch das Umformen in der zweiten Verformungsrichtung schnappt der abgeflachte Abschnitt gleichsam selbsttätig ein, wobei sich der abgeflachte Abschnitt von der Halteeinrichtung beabstandet und eine Profilfalte erzeugt. Die gleichmäßigere Spannungsverteilung erfolgt in Abhängigkeit von der Biegesteifigkeit des Materials, wodurch Überbeanspruchungen des Materials vermieden werden. Zudem ist es nicht mehr erforderlich, eine Vielzahl von Formrollen zu verwenden. Das erfindungsgemäße Verfahren läßt sich mit vergleichsweise einfachen Vorrichtungen durchführen.

Wenn das Rohr beidseitig abgeflacht wird und vor dem Umformen in der zweiten Verformungsrichtung einen im wesentlichen ovalen Querschnitt aufweist, läßt sich das erfindungsgemäße Verfahren zusätzlich vereinfachen. Eine solche Verformung läßt sich fertigungstechnisch sehr einfach realisieren.

Auch kann es sich als günstig erweisen, wenn das Umformen des Rohres in der Verformungsrichtung durch vorzugsweise zwei zueinander parallel angeordnete Verformungsrollen erfolgt. Gegenüber solchen Verfahren, die Verformungsschienen verwenden, läßt sich dadurch der Energieverbrauch senken.

Von Vorteil kann es dabei sein, wenn zylindrische Rollen verwendet werden. Solche zylindrischen Rollen lassen sich besonders einfach und kostengünstig realisieren. Zudem ermöglichen derartige zylindrische Rollen das Herstellen eines abgeflachten Abschnittes des Rohres, der im wesentlichen eben ist. Ein solcher ebener Abschnitt begünstigt das Durchführen des erfindungsgemäßen Verfahrens zusätzlich.

Weiterhin kann es sich für das Erzeugen gleichmäßigerer Wanddicken des fertigen Rohres als vorteilhaft erweisen, wenn das Umformen in der zweiten Verformungsrichtung durch zwei zweite parallel zueinander angeordnete Verformungsrollen erfolgt. Dadurch läßt sich der Energieverbrauch gegenüber solchen Lösungen absenken, die Gleitschienen verwenden.

Zur Durchführung des Verfahrens kann es sich weiterhin als günstig erweisen, wenn die Achsen der zweiten Verformungsrollen sich senkrecht zu den Achsen der ersten Verformungsrollen erstrecken. Dadurch faltet sich das Profil symmetrisch und es läßt sich eine sehr kompakte und einfach zu realisierende Vorrichtung realisieren.

Auch kann es sich als vorteilhaft erweisen, wenn das Halten mit der Halteeinrichtung und das Verformen mit den zweiten Verformungsrollen gleichzeitig erfolgt. Dadurch wird insbesondere das selbsttätige Einfalten, bzw. Beabstanden des abgeflachten Abschnittes von der Halteeinrichtung begünstigt und ein Ausweichen des Rohres verhindert. Auch läßt sich dadurch das Verfahren zum Herstellen des Rohres besser kontrollieren.

Weiterhin kann es sich als vorteilhaft erweisen, wenn die Halteeinrichtung eine Halterolle aufweist. Auch dadurch läßt sich der Energieverbrauch beim Durchführen des Verfahrens gegenüber dem Verwenden von Gleitschienen senken.

Zudem kann es sich als vorteilhaft erweisen, wenn die Halterollenachse der Halterolle senkrecht zu den Achsen der zweiten Verformungsrollen und parallel zu den Achsen der ersten Verformungsrollen verläuft. Durch diese Anordnung der Halterollenachse wird das Durchführen des Verfahrens vereinfacht. Insbesondere kann sich dies günstig auf das selbsttätige Einfalten des Rohres auswirken.

Um das gleichzeitige Halten durch die Halteeinrichtung und die Stützeinrichtung und das Umformen in der zweiten Verformungsrichtung zu ermöglichen, können die durch die Achsen der zweiten Verformungsrollen und der Halterolle gebildeten Symmetrielinien sich vorzugsweise schneiden.

Auch kann es sich als vorteilhaft erweisen, wenn der Durchmesser der Halterolle ein mehrfaches der zweiten Verformungsrollen beträgt. Dadurch wird die Faltenbildung des Profils ermöglicht.

In einer vorteilhaften Weiterbildung der Erfindung kann die Stützeinrichtung eine Stützschiene sein. Mit solch einer Stützschiene läßt sich die Stützeinrichtung besonders einfach herstellen.

Von Vorteil kann es dabei sein, wenn die Stützschiene eine ortsfeste, sich in Förderrichtung des Rohres und senkrecht zur ersten Verformungsrichtung erstreckende Stützfläche aufweist. Insbesondere in Kombination mit einer Halterolle kann sich dies für die stabile Lage des Rohres in der Verformungseinrichtung als vorteilhaft erweisen.

Dabei kann es sich als günstig erweisen, wenn die Halterolle im Bereich der Anlage mit dem Rohr konvex gestaltet ist. In Verbindung mit der Stützfläche wirkt sich dies vorteilhaft auf den Kraftfluß aus und unterstützt das selbsttätige Einfalten des Rohrs während des Umformens in der zweiten Verformungsrichtung.

In einer vorteilhaften Weiterbildung kann zwischen einer der ersten Verformungsrollen und der Halterolle eine der Stützeinrichtung gegenüberliegende Halteschiene vorgesehen sein, an der das Rohr entlang geführt wird. Dadurch läßt sich das Rohr in der durch die ersten Verformungsrollen vorgegebenen Profilform stabil halten.

Dabei kann es sich als vorteilhaft erweisen, wenn der Abstand der Halteschiene zur Stützeinrichtung im wesentlichen dem Abstand der beiden ersten Verformungsrollen voneinander entspricht. Dadurch läßt sich das Rohr nach dem Umformen in der ersten Verformungsrichtung genau definiert führen.

Auch kann es sich als vorteilhaft erweisen, wenn der Abstand zwischen Halterolle und der Stützeinrichtung im wesentlichen dem Abstand der beiden ersten Verformungsrollen voneinander entspricht. Es findet somit durch die Halterolle kein Umformen des Rohres statt.

Statt dessen wird das Rohr durch die Halterolle nur gehalten. Während des Umformens in der zweiten Verformungsrichtung kann sich das Rohr vorübergehend an der Halterolle abstützen, bevor es verformt wird und sich selbständig einfaltet, wobei sich der abgeflachte Abschnitt von der Halterolle beabstandet.

In einer vorteilhaften Weiterbildung des Verfahrens können zwei in Extrusionsrichtung übereinander angeordnete Führungsschienen vorgesehen sein, deren Abstand im wesentlichen der Höhe des fertiggestellten Rohrs entspricht. Dadurch läßt sich verhindern, daß nach dem Umformen ein Aufweiten des Rohres erfolgt.

Um das Führen des Rohres nach dem Umformen in der zweiten Verformungsrichtung zu verbessern, können die Führungsflächen an die Außenkontur des Rohres angepaßt sein.

Um den Durchsatz zu erhöhen, kann es sich als günstig erweisen, wenn das Rohr zum Umformen kontinuierlich zu- und nach dem Umformen kontinuierlich abgeführt wird. Dadurch läßt sich das Rohr in einer kontinuierlichen Weise sehr kostengünstig herstellen.

Zudem kann es sich als günstig erweisen, wenn das Rohr nach dem Extrudieren abgekühlt und vor dem Umformen wieder erwärmt wird. Dadurch läßt sich innerhalb des Querschnitts des Rohres ein gewünschtes Temperaturprofil erzeugen, wobei die Temperatur der inneren Rohrwandoberfläche möglichst gleich der Temperatur der äußeren Rohrwandoberfläche sein sollte.

Darüber hinaus ist erfindungsgemäß eine Vorrichtung zum Durchführen des Verfahrens vorgesehen, mit einer ersten Verformungseinrichtung zum wenigstens einseitigen Abflachen eines vorzugsweise kreisförmigen Ausgangsquerschnitts eines Rohres in einer ersten Verformungsrichtung, und einer zweiten Verformungseinrichtung zum Umformen des Rohres in einer zweiten Verformungsrichtung, die im wesentlichen senkrecht zur ersten Verformungsrichtung ist.

Um die erfindungsgemäßen Vorteile zu erzielen wird vorgeschlagen, daß zwischen der ersten und der zweiten Verformungseinrichtung eine Halteeinrichtung und eine Stützeinrichtung vorgesehen sind zwischen denen das Rohr nach dem Umformen in der ersten Verformungsrichtung aufgenommen ist, und die Halteeinrichtung mit dem abgeflachten Abschnitt und die Stützeinrichtung diametral gegenüberliegend mit dem Rohr in Anlage bringbar sind, wobei durch Umformen des Rohrquerschnitts in der zweiten Verformungsrichtung der abgeflachte Abschnitt von der ersten Halteeinrichtung beabstandbar ist.

Um die Vorrichtung kostengünstig realisieren zu können, kann es sich als vorteilhaft erweisen, wenn die erste Verformungseinrichtung zwei zueinander parallele erste Verformungsrollen aufweist.

Von Vorteil kann es dabei sein, wenn die ersten Verformungsrollen im wesentlichen zylindrische Manteloberflächen aufweisen. Durch solche Rollen wird eine Profilabflachung ermöglicht. Die Rollen lassen sich besonders einfach realisieren.

Ebenso kann es sich als vorteilhaft erweisen, wenn die zweite Verformungseinrichtung zwei zueinander parallele zweite Verformungsrollen aufweist. Auch dabei kann es sich als günstig erweisen, wenn die zweiten Verformungsrollen im wesentlichen zylindrische Mantelflächen aufweisen.

Zur Durchführung des Verfahrens kann es sich als vorteilhaft erweisen, wenn die Halteeinrichtung eine Halterolle aufweist. Dadurch läßt sich der Energieverbrauch beim Durchführen des Verfahrens senken.

Dabei kann es sich als günstig erweisen, wenn die Halterollenachse der Halterolle parallel zu den Achsen der ersten Verformungsrollen ist. Dadurch läßt sich ein symmetrisches Verformen des Rohres beim Durchführen des Verfahrens begünstigen.

Zur Durchführung des Verfahrens kann es sich auch als vorteilhaft erweisen, wenn der Durchmesser der Halterolle größer als der Durchmesser der ersten und / oder zweiten Verformungsrollen ist.

Ebenso kann es sich zur Durchführung des Verfahrens als günstig erweisen, wenn die Halterolle einen konvexen Rand aufweist. Mit einem solchen Rand werden Beschädigungen der Rohroberfläche vermieden.

Insbesondere zum Herstellen symmetrischer Einfaltungen des Rohrs kann es sich als günstig erweisen, wenn der konvexe Rand in zwei parallele Rollenseiten übergeht.

Ebenso kann es sich für das Verfahren in der zuvor beschriebenen Weise als günstig erweisen, wenn die Rotationsachse der Halterolle und die Achse der zweiten Verformungsrollen einander schneiden.

Auch kann es sich als günstig erweisen, wenn die Stützeinrichtung eine ortsfeste Stützfläche aufweist. Insbesondere in Verbindung mit der Halterolle kann dies günstig für die Einbringung der Verformungskraft sein.

Dabei kann es sich als vorteilhaft erweisen, wenn die Stützfläche sich in Förderrichtung des Rohres und senkrecht zur zweiten Verformungsrichtung erstreckt. Dadurch läßt sich eine Ebene erzeugen, die insbesondere in Verbindung mit einer konvexen Halterolle das Einfalten des Rohres begünstigt.

Um das Rohr während des Verfahrens besser führen zu können, kann zwischen einer der ersten Verformungsrollen und der Halteeinrichtung eine Halteschiene zum Abstützen des Rohres vorgesehen sein, die sich in Förderrichtung erstreckt.

Zudem kann es sich als günstig erweisen, wenn in Förderrichtung hinter der zweiten Verformungsrolle zwei voneinander beabstandete Führungsflächen vorgesehen sind, zwischen denen das umgeformte Rohr geführt wird. Dadurch läßt sich ein ungewolltes Verformen des Rohres nach dem Umformen in der zweiten Verformungsrichtung vermeiden.

Nachfolgend wird die Wirkungs- und Funktionsweise der Erfindung anhand eines Ausführungsbeispiels näher erläutert.
- Fig. 1: eine schematische Darstellung einer Vorrichtung zum Durchführen des erfindungsgemäßen Verfahrens in einer Draufsicht;
- Fig. 2: den Ausgangsquerschnitt eines Rohres zum Durchführen des erfindungsgemäßen Verfahrens entlang der Linie II - II aus Figur 1;
- Fig. 3: das Rohr aus Figur 2 in einer Schnittansicht entlang der Linie III - III aus Figur 1;
- Fig. 4: das Rohr entlang einer Schnittlinie IV - IV aus Figur I;
- Fig. 5: das Rohr mit Vorrichtung in einer Schnittansicht entlang der Linie V - V aus Figur 1;
- Fig. 6: das Rohr und die Vorrichtung aus Figur 5 in einem weiter fortgeschrittenen Stadium;
- Fig. 7: das Rohr mit Vorrichtung entlang einer Schnittlinie VII - VII aus Figur 1 und;
- Fig. 8: das Rohr in einer Schnittansicht entlang der Linie VIII - VIII aus Figur 1.

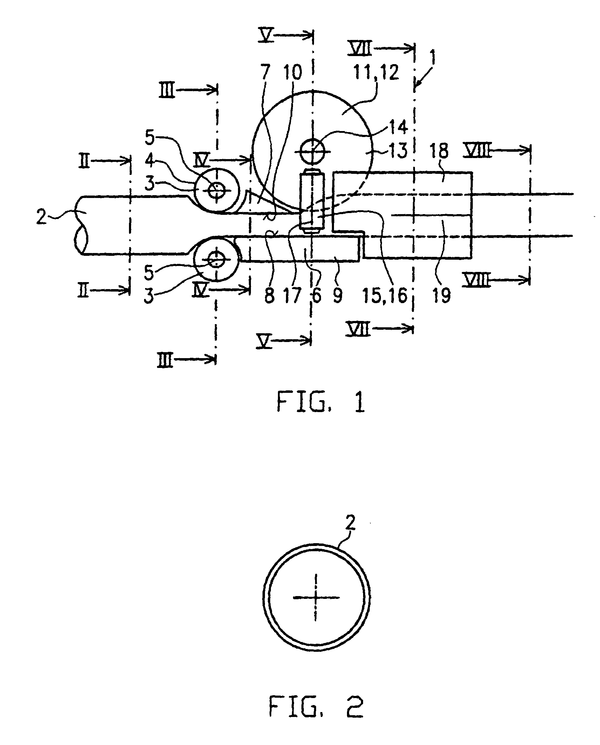

In Figur 1 ist eine Vorrichtung 1 zum Durchführen des erfindungsgemäßen Verfahrens schematisch dargestellt. Ein Rohr 2 aus thermoplastischem Kunststoff wird der Vorrichtung 1 aus einem nicht dargestellten Extruder zugeführt. Im Querschnitt gesehen ist das Rohr kreisförmig, wie dies in Figur 2 zu sehen ist.

Zunächst trifft das Rohr 2, das aus dem Extruder in der Darstellung in Figur 1 von links nach rechts gefördert wird, auf erste Verformungsrollen 3, die im wesentlichen zylindrische Mantelflächen 4 aufweisen und um Achsen 5 drehbar sind. Die Achsen 5 erstrecken sich im wesentlichen vertikal und sind in nicht dargestellten Lagern einer ebenfalls nicht dargestellten Vorrichtungsrahmen gelagert.

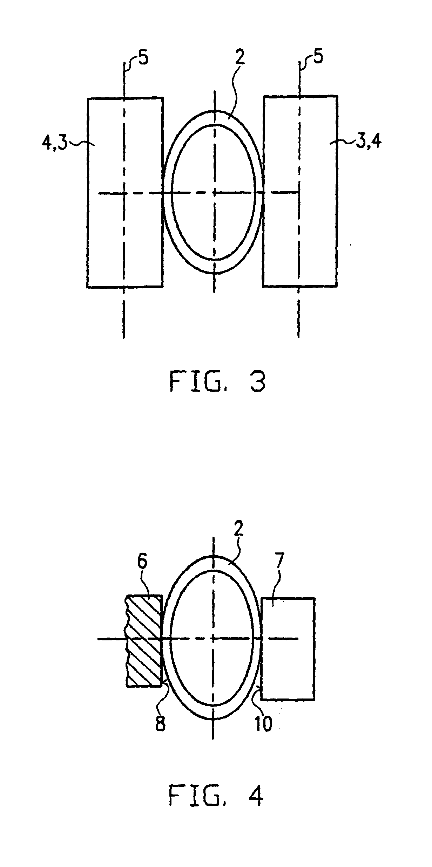

Bei Vorbeiführen des Rohres 2 an den Mantelflächen 4 der Verformungsrollen 3 nimmt das Rohr 2 die in Figur 3 dargestellte, im Querschnitt gesehen, ovale Form an, wodurch es beidseitig abgeflacht wird.

In Förderrichtung des Rohres 2 schließen sich an die Verformungsrollen 3, die eine erste Verformungseinrichtung bilden, eine Stützeinrichtung 6 und eine Halteschiene 7 an. Die Stützeinrichtung 6 verfügt über eine sich im wesentlichen vertikal erstreckende Stützfläche 8, die sich zumindest abschnittsweise mit dem Rohr 2 in Anlage befindet. Durch diese Stützfläche 8 bildet die Stützeinrichtung 6 eine Stützschiene 9. Die Stützfläche 8 der Stützschiene 9 erstreckt sich dabei in Förderrichtung, so daß das Rohr 2 an ihr entlang geführt werden kann. Die der Stützeinrichtung 6 gegenüberliegende Halteschiene 7 ist als Dreiecksschiene ausgebildet, mit einer Haltefläche 10, die sich ebenfalls vertikal und parallel zur Förderrichtung des Rohres 2 erstreckt. Während der Durchführung des Verfahrens befindet sich das Rohr 2 zwischen der Stützfläche 8 und der Haltefläche 10, wobei es sich zumindest abschnittsweise mit der Stützfläche 8 und der Haltefläche 10 in Anlage befindet. Der Abstand der Halteflächen stimmt dabei mit dem Abstand der Mantelflächen 4 der ersten Verformungsrollen überein.

An die Dreiecksschiene schließt sich in Förderrichtung des Rohres 2 eine Halteeinrichtung 11 an, die eine Halterolle 12 aufweist, die mit einem Rand 13 versehen ist. Dieser Rand 13 befindet sich am Außenumfang der Halterolle 12. im Querschnitt gesehen ist der Rand der Halterolle 12 halbkreisförmig und konvex, wobei sich an den Rand an der Oberseite und der Unterseite der Halterolle 12 gerade Abschnitte anschließen. Die Halterolle 12 ist um eine sich vertikal erstreckende Halterollenachse 14 drehbar gelagert, die sich parallel zu den Achsen 5 erstreckt. Zwischen dem Rand der Halterolle 12 und der Stützfläche 8 besteht im wesentlichen der gleiche Abstand, wie zwischen der Stützfläche 8 und der Haltefläche 10.

Oberhalb und unterhalb der Halterolle 12 befinden sich jeweils zweite Verformungsrollen 15, die eine zweite Verformungseinrichtung bilden, mit zugehörigen Mantelflächen 16. Beide Verformungsrollen 15 sind jeweils um Achsen 17 drehbar in dem nicht dargestellten Vorrichtungsrahmen gelagert. Gedachte Linien durch die Achsen 17 und Halterollenachsen 14 würden sich jeweils oberhalb und unterhalb der Halterolle 12 schneiden.

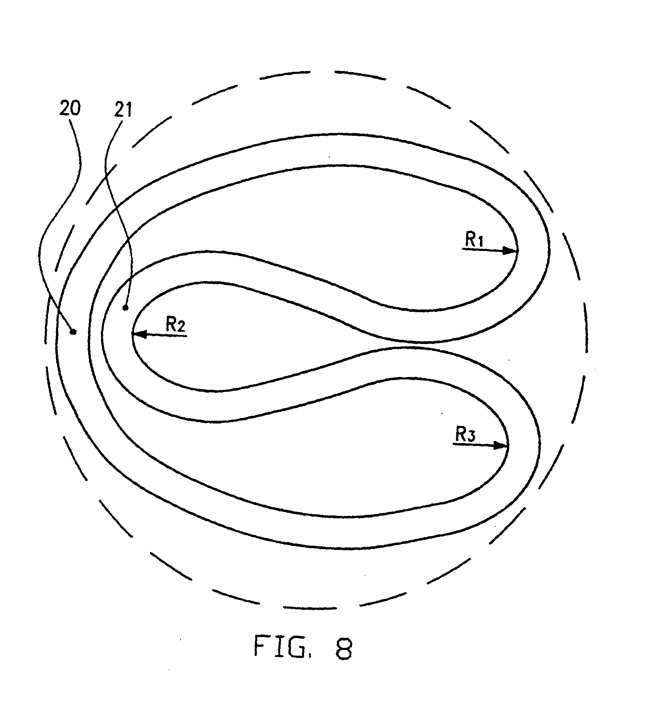

Die Achse 17 erstreckt sich dabei senkrecht zur Förderrichtung des Rohres 2. In vertikaler Richtung ist der Abstand der beiden Mantelflächen 16 und der zweiten Verformungsrollen 15 so bemessen, daß er kleiner ist als die Höhe des Rohres 2 gemessen entlang der längeren der beiden Hauptachsen des Querschnitts an der Schnittlinie III - III in Figur 1. Dieser geringere Abstand bewirkt ein Falten des Rohres 2 in einen Querschnitt, der im wesentlichen dem in Figur 8 dargestellten Querschnitt entspricht.

Im Anschluß an die Halterolle 12 und die zweiten Verformungsrollen 15 schließen sich in Förderrichtung zwei Führungsschienen 18 und 19 an. Diese Führungsschienen 18 und 19 bilden jeweils voneinander beabstandete Führungsflächen, die sich in Förderrichtung erstrecken. Im Querschnitt gesehen sind diese Führungsflächen an das Rohr angepaßt. Alternativ können sie jedoch auch eben sein und parallel zueinander angeordnet sein, wobei sie sich parallel zu den Achsen 17 erstrecken. Der Abstand der übereinander angeordneten Führungsflächen entspricht dabei der Höhe des fertigen Rohres. Durch die Führungsschienen wird sichergestellt, daß die durch das Umformen erzeugte Form des Rohres nach dem Verlassen der Verformungsrollen 15 beibehalten wird.

Das durch die Führungsflächen der Führungsschienen 18 und 19 hindurchgeförderte Rohr 2, weist den in Figur 4 dargestellten Querschnitt auf. Dieser Querschnitt setzt sich zusammen aus einem Mantelflächenabschnitt 20 und einem nach innen gefalteten Abschnitt 21. Aufgrund dieser Gestaltung des Rohres ist auch der Gesamtaußendurchmesser gegenüber dem kreisförmigen Ausgangsdurchmesser, wie er in Figur 2 dargestellt ist, verkleinert. Dieser verkleinerte Durchmesser ist in Figur 8 im Verhältnis zum Durchmesser des Ausgangsquerschnittes durch eine gestrichelte Linie angedeutet. Die mit R₁ - R₃ gekennzeichneten Krümmungsradien sind etwa gleich groß. Die Rohrwanddicke ist im wesentlichen konstant.

Nachfolgend wird die Wirkungs- und Funktionsweise des erfindungsgemäßen Verfahrens näher erläutert:

Das Rohr wird zunächst in bekannter Weise aus einem thermoplastischen Kunststoff extrudiert. Nach dem Extruder wird es kontrolliert abgekühlt.

Dadurch soll verhindert werden, daß bei den späteren Verfahrensschritten des Umformens ein Aneinanderhaften der Innenseiten des nach innen gewölbten Abschnittes 21 und des Mantelflächenabschnittes 20 erfolgt. Da durch das Abkühlen die Festigkeit des Rohres zunimmt und ein Umformen stark erschwert wäre, erfolgt nach dem Abkühlen ein kontrolliertes Erwärmen des Rohres. Dadurch werden die Rohrinnen-/ und -außentemperaturen weitgehend angeglichen. Das erwärmte Rohr läßt sich leichter umformen.

Nach dem Extrudieren und Kalibrieren des Rohres 2, sowie dem Abkühlen und dem gezielten Erwärmen des Rohres wird dieses der in Figur 1 dargestellten Vorrichtung zugeführt. Das Rohr 2 läuft dabei von links nach rechts durch die Vorrichtung. Im Ausgangszustand des Rohres 2 mit kreisförmigem Rohrquerschnitt wird das Rohr 2 den beiden ersten Verformungsrollen 3 zugeführt, wobei es zwischen den beiden Mantelflächen 4 hindurchgeführt und dadurch in einer ersten Verformungsrichtung umgeformt wird. Diese Verformungsrichtung verläuft aufgrund der vertikalen Achsen 5 horizontal. Alternativ ist es auch denkbar, die Vorrichtung 1 um 90° zu drehen, so daß die Achsen 5 und die Halterollenachse 14 horizontal und die beiden Achsen 17 vertikal verlaufen.

Während des Umformens des Rohres 2 in der ersten Verformungsrichtung nimmt das Rohr 2 den in Figur 3 dargestellten beidseitig abgeflachten Querschnitt ein, der im wesentlichen elliptisch ist. Die längere der beiden Hauptachsen erstreckt sich dabei vertikal. Der Krümmungsradius am oberen und unteren Ende der größeren Hauptachse ergibt sich aufgrund der temperaturabhängigen Biegespannung des Rohres 2, wie auch der Krümmungsradius an der kleineren Hauptachse. Bei einem sehr weichen Rohr wird der Krümmungsradius an der kleinen Hauptachse sehr groß werden, bzw. das Rohr aufgrund der zylindrischen Gestaltung der beiden Mantelflächen 4 beinahe eben verlaufen. Es wird jedoch bevorzugt, daß das Rohr eine gewisse Mindestfestigkeit aufweist, die zu einer möglichst elliptischen Gestaltung des Querschnittes des Rohres führt. Die Krümmungsradien R₁ und R₃ des fertiggestellten Rohres entsprechen dabei im wesentlichen den Krümmungsradien an der größeren Hauptachse.

Die Festigkeit, bzw. die Verformbarkeit des Rohres ergibt sich durch das Material, aus dem das Rohr hergestellt ist, sowie die Profilgeometrie.

Ein festeres Material erhöht naturgemäß die Rohrsteifigkeit, bzw. verringert die Verformbarkeit, ebenso wie eine größere Wanddicke. Im vorliegenden Beispiel besteht das Rohr aus Polyethylen und verfügt über einen Durchmesser von 190 mm bei einer Wanddicke von 12,7 mm. Das Rohr verläßt den Extruder mit einer Temperatur von 190°C, wird während des Kalibrierens zunächst an der äußeren Rohroberfläche abgekühlt und anschließend an der Außenseite auf maximal 115 °C erwärmt. Durch das Umformen des kreisförmigen Ausgangsquerschnittes in die ovale Form wird der Außendurchmesser im abgeflachten Abschnitt um mindestens 10% des Ausgangsaußendurchmessers reduziert. Diese Reduktion des Außendurchmessers entspricht der kleineren Hauptachse der ovalen Querschnittsform. Selbstverständlich sind auch andere Abmessungen und Temperaturbereiche, sowie stärkeres oder geringeres Umformen möglich. Der Fachmann wird die entsprechenden Parameter experimentell ermitteln.

Im Anschluß an das Umformen in der ersten Verformungsrichtung wird das Rohr 2 jeweils an der Stützfläche 8 und Haltefläche 10, der Halteschiene 7 und der Stützeinrichtung 6 entlang geführt. Die Stützeinrichtung 6 ist dabei wesentlich länger als die Halteschiene 7. An die Halteschiene 7 schließt sich jedoch die Halterolle 12 mit ihrem Rand 13 an. Das Rohr wird dabei am Rand 13 entlang geführt, wobei das Rohr gleichzeitig mit den beiden Mantelflächen 16 der zweiten Verformungsrollen 15 in Eingriff gelangt. Da der Abstand der beiden Mantelflächen 16 kleiner ist als die Länge der größeren Hauptachse des Rohrquerschnitts, erfolgt wiederum ein Umformen des Rohres, diesmal in einer zweiten Verformungsrichtung, die senkrecht zur ersten Verformungsrichtung ist. Durch die Halteeinrichtung 12 und die Stützfläche 8 kann das Rohr 2 in diesem Bereich nicht seitlich ausweichen.

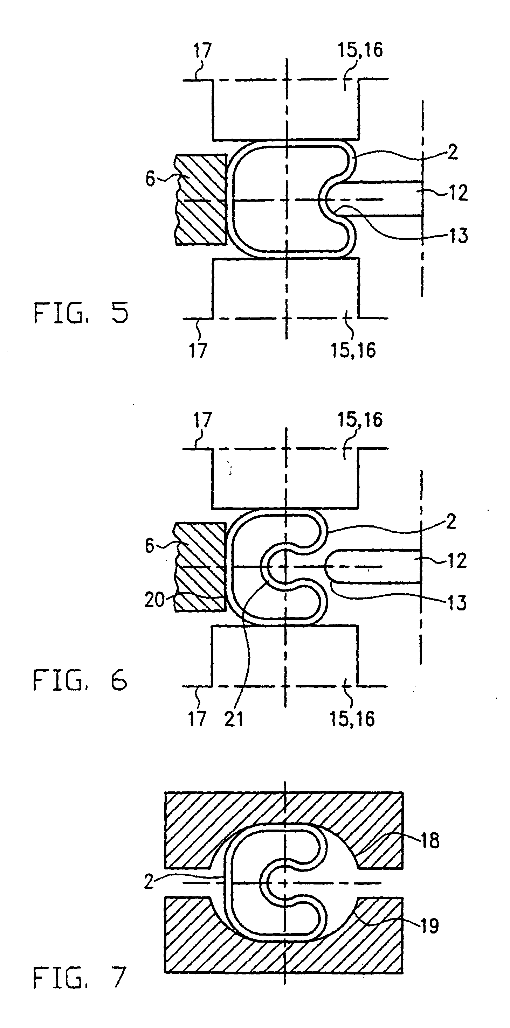

Das Umformen des Rohres in der zweiten Verformungsrichtung erfolgt in der in den Figuren 5 und 6 schematisch dargestellten Weise, wobei die beiden Zustände zeitlich unmittelbar aufeinanderfolgen. Aufgrund der zweiten Verformungsrollen nimmt der Querschnitt zunächst die in Figur 5 dargestellte Form ein, wobei sich die der Halterolle benachbarten Abschnitte des Rohrquerschnitts zwischen den zugeordneten Verformungsrollen und der Halterolle aufbäumen.

In diesem Zustand legt sich die Außenfläche des Rohres an den Rand 13 an. Während der Verformung in Figur 5 weist das Rohr erstmals Abschnitte auf, bei denen die Rohrwand um einen Mittelpunkt gebogen wird, der von der Rohrmittellinie distanziert liegt. Aufgrund der unterschiedlichen Gestaltung der Halterolle und der Stützeinrichtung 6 erfolgt eine stärkere Umformung im Bereich der Halterolle. Durch die im Rohr erzeugte Biegespannung wird nun das Rohr dazu veranlaßt sich von der ortsfesten Halterolle zu beabstanden und selbsttätig die in Figur 6 dargestellte Form einzunehmen. Das Rohr schnappt gleichsam in die eingefaltete Form, wie sie in Figur 6 und auch in Figur 8 dargestellt ist. Dieses Einschnappen wird nur durch das Umformen in der zweiten Verformungsrichtung hervorgerufen. Sowohl die Halterolle, als auch die Stützeinrichtung sind ortsfest und haben letztendlich keinen Einfluß auf die genaue Gestaltung des eingefalteten Abschnitts und auch die Außenkontur des Rohres. Die Krümmungsradien ergeben sich automatisch aufgrund der Biegesteifigkeit des Rohres unabhängig von der Gestaltung der Halterolle. Durch das selbsttätige Einschnappen des Rohres können auch Hinterschneidungen erzeugt werden, die bei herkömmlichen Verfahren den Einsatz von speziellen Formschienen erfordern.

Im Anschluß an das Umformen in der zweiten Verformungsrichtung wird das Rohr 2 noch durch die Führungsschienen 18 und 19, bzw. deren Führungsflächen hindurchgeführt. In der endgültigen Form ist der Außendurchmesser des Rohres 2 gegenüber dem Ausgangsquerschnitt verringert. Dies ist in Figur 7 gut zu sehen.

Durch das neuartige Verfahren ist es nunmehr möglich, aus einem kreisförmigen Rohrquerschnitt ein Rohr mit einer gleichmäßigeren Wanddickenverteilung und in einem Querschnitt mit Hinterschneidungen, wie er in Figur 8 dargestellt ist, durch Umformen in wenigen Schritten zu erzeugen, wobei nur sehr einfach zu fertigende Werkzeuge erforderlich sind.

Zwar haben sich zwei parallel zueinander angeordnete, zylindrische Rollen für das Umformen in der ersten Verformungsrichtung zur Durchführung des Verfahrens als besonders günstig erwiesen, andererseits ist es auch möglich, das Rohr nur einseitig abzuflachen. Dies kann z. B. mit drei Rollen erfolgen. Dabei kann eine Rolle vertikal angeordnet sein, mittels derer ein Abflachen des Querschnittes erfolgt und die anderen beiden Rollen gegenüber dieser Rolle geneigt angeordnet sein, wobei die Achsen der geneigten und parallelen Rollen in einer Ebene liegen und einander schneiden.

Dadurch wird das Rohr an drei Seiten gestützt. Ebenso muß der Winkel zwischen der ersten und zweiten Verformungsrichtung nicht genau 90° betragen. Geringfügige Abweichungen sind möglich und lassen ein Durchführen des Verfahrens zu. 90° sind zur Durchführung des Verfahrens jedoch besonders vorteilhaft.

## Patentansprüche

1. Verfahren zum mehrstufigen Umformen eines Rohres (2), vorzugsweise eines Kunststoffrohres, dessen im wesentlichen kreisförmiger Ausgangsquerschnitt in einem ersten Schritt durch Umformen des Rohres (2) in einer ersten Verformungsrichtung zumindest einseitig radial abgeflacht und in einem zweiten Schritt in einer zweiten Verformungsrichtung, die im wesentlichen senkrecht zur ersten Verformungsrichtung ist, umgeformt wird, wobei der Endquerschnitt nach dem Umformen einen verringerten Außendurchmesser und zumindest einen nach innen gefalteten Abschnitt aufweist,
**dadurch gekennzeichnet,**
**daß** nach dem Umformen des Rohres (2) in der ersten Verformungsrichtung das Rohr (2) mit einer Halteeinrichtung (11,12) und einer diametral gegenüberliegenden Stützeinrichtung (6) in Anlage gebracht wird, wobei sich die Halteeinrichtung (11,12) mit dem abgeflachten Abschnitt in Anlage befindet und durch das Umformen in der zweiten Verformungsrichtung sich der abgeflachte Abschnitt von der Halteeinrichtung (11,12) zum Erzeugen des nach innen gefalteten Abschnitts (21) selbsttätig beabstandet.

2. Verfahren nach Anspruch 1, **dadurch gekennzeichnet, daß** das Rohr (2) beidseitig abgeflacht wird und vor dem Verformen in der zweiten Verformungsrichtung einen im wesentlichen ovalen Querschnitt aufweist.

3. Verfahren nach Anspruch 1 oder 2, **dadurch gekennzeichnet, daß** das Verformen des Rohres (2) in der ersten Verformungsrichtung durch vorzugsweise zwei zueinander im wesentlichen parallel angeordnete Verformungsrollen (3) erfolgt.

4. Verfahren nach Anspruch 3, **dadurch gekennzeichnet, daß** zylindrische Rollen verwendet werden.

5. Verfahren nach einem der vorangegangenen Ansprüche, **dadurch gekennzeichnet, daß** das Umformen in der zweiten Verformungsrichtung durch vorzugsweise zwei zweite, im wesentlichen parallel zueinander angeordnete Verformungsrollen (15) erfolgt.

6. Verfahren nach Ans ruch 5, **dadurch gekennzeichnet, daß** die Achsen (17) der zweiten Verformungsrollen (15) sich senkrecht zu den Achsen (5) der ersten Verformungsrollen (3) erstrecken.

7. Verfahren nach einem der vorangegangenen Ansprüche, **dadurch gekennzeichnet, daß** das Halten mit der Halteeinrichtung (11) und das Verformen mit den zweiten Verformungsrollen (15) gleichzeitig erfolgt.

8. Verfahren nach einem der vorangegangenen Ansprüche, **dadurch gekennzeichnet, daß** die Halteeinrichtung (11) eine Halterolle (12) aufweist.

9. Verfahren nach Anspruch 8 **dadurch gekennzeichnet, daß** die Halterollenachse (14) im wesentlichen senkrecht zu den Achsen (17) der zweiten Verformungsrollen (15) und im wesentlichen parallel zu den Achsen (5) der ersten Verformungsrollen (3) verläuft.

10. Verfahren nach Anspruch 9, **dadurch gekennzeichnet, daß** die durch die Achsen (17) der zweiten Verformungsrollen (15) und der Halterollenachse (14) gebildeten Symmetrielinien sich schneiden.

11. Verfahren nach einem der vorangegangenen Ansprüche, **dadurch gekennzeichnet, daß** der Durchmesser der Halterolle (12) ein mehrfaches der zweiten Verformungsrollen (15) beträgt.

12. Verfahren nach Anspruch 11, **dadurch gekennzeichnet, daß** die Stützeinrichtung (6) eine Stützschiene (9) aufweist.

13. Verfahren nach Anspruch 12, **dadurch gekennzeichnet, daß** die Stützschiene (9) eine ortsfeste, sich in Förderrichtung des Rohres (2) und senkrecht zur ersten Verformungsrichtung erstreckende Stützfläche aufweist.

14. Verfahren nach einem vorangegangenen Ansprüche, **dadurch gekennzeichnet, daß** die Halterolle (12) im Bereich der Anlage am Rohr (2) konvex gestaltet ist.

15. Verfahren nach einem der vorangegangenen Ansprüche, **dadurch gekennzeichnet, daß** zwischen einer der ersten Verformungsrollen (3) und der Halterolle (12) eine der Stützeinrichtung (6) gegenüberliegende Halteschiene (7) vorgesehen ist, an der das Rohr (2) entlang geführt wird.

16. Verfahren nach Anspruch 14, **dadurch gekennzeichnet, daß** der Abstand der Halteschiene (7) zur Stützeinrichtung (6) im wesentlichen dem Abstand der ersten beiden Verformungsrollen (3) voneinander entspricht.

17. Verfahren nach einem der vorangegangenen Ansprüche, **dadurch gekennzeichnet, daß** der Abstand zwischen Halterolle (12) und Stützeinrichtung (6) im wesentlichen dem Abstand der beiden ersten Verformungsrollen (3) voneinander entspricht.

18. Verfahren nach einem der vorangegangenen Ansprüche, **dadurch gekennzeichnet, daß** nach den zweiten Verformungsrollen (15) zwei in Extrusionsrichtung übereinander angeordnete Führungsschienen (18,19) vorgesehen sind, deren Abstand im wesentlichen der Höhe des fertiggestellten Rohres entspricht.

19. Verfahren nach Anspruch 18, **dadurch gekennzeichnet, daß** die Führungsflächen an die Außenkontur des Rohres (2) angepaßt sind.

20. Verfahren nach einem der vorangegangenen Ansprüche, **dadurch gekennzeichnet, daß** das Rohr (2) zum Umformen kontinuierlich zu- und nach dem Umformen kontinuierlich abgeführt wird.

21. Verfahren nach einem der vorangegangenen Ansprüche, **dadurch gekennzeichnet, daß** das Rohr (2) nach dem Extrudieren abgekühlt und vor dem Umformen wieder erwärmt wird.

22. Vorrichtung zum Durchführen des Verfahrens nach einem der Ansprüche 1 bis 21, mit einer ersten Verformungseinrichtung (3) zum wenigstens einseitigen Abflachen eines vorzugsweise kreisförmigen Ausgangsquerschnitts eines Rohres (2) in einer ersten Verformungsrichtung, und einer zweiten Verformungseinrichtung (15, 16) zum Umformen des Rohrquerschnitts in einer zweiten Verformungsrichtung, die im wesentlichen senkrecht zur ersten Verformungsrichtung ist, **dadurch gekennzeichnet, daß** zwischen der ersten und zweiten Verformungseinrichtung eine Halteeinrichtung (11, 12), und eine Stützeinrichtung (6) vorgesehen sind, zwischen denen das Rohr (2) nach dem Umformen in der ersten Verformungsrichtung aufgenommen ist, und daß die Halteeinrichtung (11,12) mit dem abgeflachten Abschnitt und die Stützeinrichtung (6) diametral gegenüberliegend mit dem Rohr in Anlage bringbar sind, wobei durch Umformen des Rohres in der zweiten Verformungsrichtung der abgeflachte Abschnitt von der Halteeinrichtung beabstandbar ist.

23. Vorrichtung nach Anspruch 22, **dadurch gekennzeichnet, daß** die erste Verformungseinrichtung zwei zueinander parallele erste Verformungsrollen (3) aufweist.

24. Vorrichtung nach Anspruch 22, **dadurch gekennzeichnet, daß** die ersten Verformungsrollen (3) im wesentlichen zylindrische Mantelflächen (4) aufweisen.

25. Vorrichtung der einem der vorangegangenen Ansprüche 22 bis 24, **dadurch gekennzeichnet, daß** die zweite Verformungseinrichtung zwei zueinander parallele zweite Verformungsrollen (15, 16) aufweist.

26. Vorrichtung nach Anspruch 25, **dadurch gekennzeichnet, daß** die zweiten Verformungsrollen (15) im wesentlichen zylindrische Mantelflächen (16) aufweisen.

27. Vorrichtung nach einem der vorangegangenen Ansprüche 22 bis 26, **dadurch gekennzeichnet, daß** die Halteeinrichtung eine Halterolle (12) aufweist.

28. Vorrichtung nach einem der vorangegangenen Ansprüche, **dadurch gekennzeichnet daß** die Halterollenachse (14) der Halterolle (12) im wesentlichen parallel zu den Achsen (5) der ersten Verformungsrollen (3) ist.

29. Vorrichtung nach einem der Ansprüche 27 bis 28, **dadurch gekennzeichnet, daß** der Durchmesser der Halterolle (12) größer als der Durchmesser der ersten (3) und / oder zweiten (15) Verformungsrollen ist.

30. Vorrichtung nach einem der Ansprüche 27 bis 29, **dadurch gekennzeichnet, daß** die Halterolle (12) einen konvexen Rand (13) aufweist.

31. Vorrichtung nach Anspruch 30, **dadurch gekennzeichnet, daß** der konvexe Rand (13) in zwei parallele Rollenseiten übergeht.

32. Vorrichtung nach einem der Ansprüche 27 bis 31, **dadurch gekennzeichnet, daß** die Halterollenachse (14) und die Achsen (17) der zweiten Verformungsrollen (15) einander schneiden.

33. Vorrichtung nach einem der Ansprüche 22 bis 32, **dadurch gekennzeichnet, daß** die Stützeinrichtung (6) eine ortsfeste Stützfläche aufweist.

34. Vorrichtung nach Anspruch 33, **dadurch gekennzeichnet, daß** die Stützfläche sich in Förderrichtung des Rohres (2) und senkrecht zur zweiten Verformungsrichtung erstreckt.

35. Vorrichtung nach einem der Ansprüche 22 bis 34, **dadurch gekennzeichnet, daß** zwischen einer der ersten Verformungsrollen (3) und der Halteeinrichtung (11,12) eine Halteschiene (9) vorgesehen ist, die sich zum Halten des abgeflachten Rohrabschnittes in Förderrichtung erstreckt.

36. Vorrichtung nach einem der Ansprüche 22 bis 34, **dadurch gekennzeichnet, daß** in Förderrichtung hinter den zweiten Verformungsrollen (15) zwei voneinander beabstandete Führungsflächen vorgesehen sind, zwischen denen das verformte Rohr (2) geführt wird.

## Claims

1. Process for the multi-stage forming of a tube (2), primarily a plastic tube, whose mainly circular initial cross-section is radially flattened at least on one side in the first stage by forming the tube (2) and is formed in a second stage in a second direction which is mainly vertical to the first direction of forming, by which the final cross-section after forming has a reduced outside diameter and at least one section folded inwards,
**characterised by**:
After the tube (2) has been formed in the first direction of forming, the tube (2) is put into contact with a retaining device (11, 12) and a diametrically opposing support (6), in which the retaining device (11, 12) is in contact with the flattened section and the flattened section is automatically pushed by the retaining device (11, 12) in the second direction of forming to create the inward folded section (21).

2. Process according to Claim 1, **characterised by**: The tube (2) is flattened at both sides and has a mainly oval cross-section before forming in the second direction of forming.

3. Process according to Claim 1 or 2, **characterised by**: the forming of the tube (2) in the first direction of forming is preferably conducted by two forming rollers (3) which are arranged mainly parallel to each other.

4. Process according to Claim 3, **characterised by**: cylindrical rollers are employed.

5. Process according to one of the above claims, **characterised by**: forming in the second direction of forming is preferably conducted by two second forming rollers (15) which are arranged mainly parallel to each other.

6. Process according to Claim 5, **characterised by**: The axes (17) of the second forming rollers (15) extend perpendicularly to the axes (5) of the first forming rollers (3).

7. Process according to one of the above claims, **characterised by**: Gripping with the retaining device (11) and forming with the second forming rollers (15) occur simultaneously.

8. Process according to one of the above claims, **characterised by**: The retaining device (11) is equipped with a retaining roller (12).

9. Process according to Claim 8, **characterised by**: The axis (14) of the retaining roller is mainly perpendicular to the axes (17) of the second forming rollers (15) and mainly parallel to the axes (5) of the first forming rollers (3).

10. Process according to Claim 9, **characterised by**: The lines of symmetry formed by the axes (17) of the second forming rollers (15) and the axis (14) of the retaining roller intersect.

11. Process according to one of the above claims, **characterised by**: The diameter of the retaining roller (12) is a multiple of that of the second forming rollers (15).

12. Process according to Claim 11, **characterised by**: The support (6) is equipped with a supporting rail (9).

13. Process according to Claim 12, **characterised by**: The supporting rail (9) has a fixed supporting surface extending in the direction of passage of the tube (2) and perpendicular to the first forming device.

14. Process according to one of the above claims, **characterised by**: The retaining roller (12) is convex in shape at the point of contact with the tube (2).

15. Process according to one of the above claims, **characterised by**: A retaining rail (7) is fitted between one of the first forming rollers (3) and the retaining roller (12) opposite the support (6), along which the tube (2) is guided.

16. Process according to Claim 14, **characterised by**: The distance between the retaining rail (7) and the support (6) mainly corresponds with the distance between the first two forming rollers (3).

17. Process according to one of the above claims, **characterised by**: The distance between the retaining roller (12) and the support (6) mainly corresponds with the distance between the first two forming rollers (3).

18. Process according to one of the above claims, **characterised by**: Two guide rails (18, 19) are located one above the other following the second forming rollers (15) in the direction of extrusion whose separation mainly corresponds to the height of the completed tube.

19. Process according to Claim 18, **characterised by**: The guide surfaces are shaped to the outside contour of the tube (2).

20. Process according to one of the above claims, **characterised by**: The tube (2) is fed continuously for forming and is removed continuously after forming.

21. Process according to one of the above claims, **characterised by**: The tube (2) is cooled after extrusions and is reheated before forming.

22. Device to execute the process according to one of Claims 1 to 21, with a first forming device (3) to flatten the preferably circular cross-section of a tube (2) on at least one side in a first direction of forming and a second forming device (15, 16) to form the cross-section of the tube in a second direction of forming, which is mainly perpendicular to the first direction of forming, **characterised by**: A retaining device (11, 12) and a support (6) are fitted between the first and second forming devices, between which the tube (2) is held after forming in the first forming device and the retaining device (11, 12) can be set into contact with the flattened section of the tube and the diametrically opposing support (6) with the tube, in which the flattened section can be withdrawn from the retaining device by the forming of the tube in the second direction of forming.

23. Device according to Claim 22, **characterised by**: The first forming device is equipped with two first forming rollers (3) parallel to each other.

24. Device according to Claim 22, **characterised by**: The first forming rollers (3) are equipped mainly with cylindrical mantle surfaces (4).

25. Device according to one of the above Claims 22 to 24, **characterised by**: The second forming device is equipped with two second forming rollers (15, 16) parallel to each other.

26. Device according to Claim 25, **characterised by**: The second forming rollers (15) are equipped mainly with cylindrical mantle surfaces (16).

27. Device according to one of the above Claims 22 to 26, **characterised by**: The retaining device is equipped with a retaining roller (12).

28. Device according to one of the above Claims, **characterised by**: The axis (14) of the retaining roller (12) is mainly parallel to the axes (5) of the first forming rollers (3).

29. Device according to one of Claims 27 to 28, **characterised by**: The diameter of the retaining roller (12) is greater than the diameter of the first (3) and / or second (15) forming rollers.

30. Device according to one of Claims 27 to 29, **characterised by**: The retaining roller (12) has a convex edge (13).

31. Device according to Claim 30, **characterised by**: The convex edge (13) extends to two parallel sides of the roller.

32. Device according to one of Claims 27 to 31, **characterised by**: The axis (14) of the retaining roller and the axes (17) of the second forming rollers (15) intersect.

33. Device according to one of Claims 22 to 32, **characterised by**: The supporting device (6) is equipped with a fixed supporting surface.

34. Device according to Claim 33, **characterised by**: The supporting surface extends in the direction of passage of the tube (2) and perpendicularly to the second direction of forming.

35. Device according to one of Claims 22 to 34, **characterised by**: A retaining rail (9) is fitted between one of the first forming rollers (3) and the retaining device (11, 12), which extends in the conveyed direction to retain the flattened section of tube.

36. Device according to one of Claims 22 to 34, **characterised by**: Two guide surfaces are fitted at a distance from each other following the second forming rollers (15) in the conveyed direction, between which the formed tube (2) is guided.

## Revendications

1. Procédé de formage d'un tube (2) en plusieurs phases (de préférence un tube en plastique) dont la section initiale à peu près ronde est, dans une première étape, aplatie radialement au moins sur un côté suite à une déformation du tube (2) effectuée suivant une première direction de déformation et, dans une seconde étape, mise en forme suivant une seconde direction de déformation à peu près perpendiculaire à la première direction de déformation - la section finale obtenue après le formage présentant un diamètre extérieur réduit et au moins un segment plié vers l'intérieur.
Ce procédé se **caractérise par le fait**
**que**, après la déformation du tube (2) effectuée suivant la première direction de déformation, le tube (2) est ajusté à un dispositif de maintien (11,12) et un dispositif d'appui (latéral) (6) dont la position est diamétralement opposée à celle du dispositif précédent - le dispositif de maintien (11,12) se trouvant accolé à la partie aplatie du tube et cette dernière s'écartant d'elle-même du dispositif de maintien (11,12) suite à l'opération de mise en forme effectuée suivant la seconde direction de déformation pour former le segment plié vers l'intérieur (21).

2. Le procédé selon la spécification n°1 se **caractérise par le fait que** le tube (2) est aplati des deux côtés et qu'il présente, avant la mise en forme suivant la seconde direction de déformation, une section à peu près ovale.

3. Le procédé selon la spécification n°1 ou 2 se **caractérise par le fait que** la déformation du tube (2) suivant la première direction de déformation est effectuée de préférence par deux rouleaux de formage (3) à peu près parallèles entre eux.

4. Le procédé selon la spécification n°3 se **caractérise par le fait que** les rouleaux utilisés sont des rouleaux cylindriques.

5. Le procédé selon une des spécifications précédentes se **caractérise par le fait que** le formage du tube suivant la seconde direction de déformation est effectué de préférence par deux seconds rouleaux de formage (15) à peu près parallèles entre eux.

6. Le procédé selon la spécification n°5 se **caractérise par le fait que** les axes (17) des seconds rouleaux de formage (15) sont perpendiculaires aux axes (5) des premiers rouleaux de formage (3).

7. Le procédé selon une des spécifications précédentes se **caractérise par le fait que** le maintien du tube à l'aide du dispositif de maintien (11) et l'opération de mise en forme effectuée par les seconds rouleaux de formage (15) ont lieu simultanément.

8. Le procédé selon une des spécifications précédentes se **caractérise par le fait que** le dispositif de maintien (11) comprend un rouleau (12) servant au maintien du tube.

9. Le procédé selon la spécification n°8 se **caractérise par le fait que** l'axe (14) du rouleau de maintien est à peu près perpendiculaire aux axes (17) des seconds rouleaux de formage (15) et à peu près parallèle aux axes (5) des premiers rouleaux de formage (3).

10. Le procédé selon la spécification n°9 se **caractérise par le fait que** les axes de symétrie formés par les axes (17) des seconds rouleaux de formage (15) et l'axe (14) du rouleau de maintien se coupent.

11. Le procédé selon une des spécifications précédentes se **caractérise par le fait que** le diamètre du rouleau de maintien (12) est plusieurs fois supérieur à celui des seconds rouleaux de formage (15).

12. Le procédé selon la spécification n°11 se **caractérise par le fait que** le dispositif d'appui (latéral) (6) comprend un guide d'appui (9).

13. Le procédé selon la spécification n°12 se **caractérise par le fait que** le guide d'appui (9) présente une surface d'appui fixe parallèle à la direction d'entraînement du tube (2) et perpendiculaire à la première direction de déformation.

14. Le procédé selon une des spécifications précédentes se **caractérise par le fait que** la partie du rouleau de maintien (12) qui est accolée au tube (2) présente une forme convexe.

15. Le procédé selon une des spécifications précédentes se **caractérise par le fait qu'**un guide (7) servant au maintien du tube et suivant lequel le tube (2) sera guidé est prévu entre l'un des premiers rouleaux de formage (3) et le rouleau de maintien (12) et placé en face du dispositif d'appui (6).

16. Le procédé selon la spécification n°14 se **caractérise par le fait que** la distance entre le guide de maintien (7) et le dispositif d'appui (6) correspond à peu près à l'écartement des deux premiers rouleaux de formage (3).

17. Le procédé selon une des spécifications précédentes se **caractérise par le fait que** la distance entre le rouleau de maintien (12) et le dispositif d'appui (6) correspond à peu près à l'écartement des deux premiers rouleaux de formage (3).

18. Le procédé selon une des spécifications précédentes se **caractérise par le fait que** deux guides de sortie (18,19) placés dans le sens d'extrusion et l'un au-dessus de l'autre sont prévus après les seconds rouleaux de formage (15) - l'écartement de ces guides correspondant à peu près à la hauteur du tube final.

19. Le procédé selon la spécification n°18 se **caractérise par le fait que** les guides de sortie présentent des surfaces de guidage épousant le contour extérieur du tube (2).

20. Le procédé selon une des spécifications précédentes se **caractérise par le fait que** le tube (2) à former est engagé puis, après l'opération de mise en forme, dégagé de manière continue.

21. Le procédé selon une des spécifications précédentes se **caractérise par le fait que** le tube (2) est refroidi après l'extrusion et à nouveau réchauffé avant le formage.

22. Installation nécessaire à l'exécution du procédé selon l'une des spécifications n°1 à 21 comprenant un premier dispositif de formage (3) servant à aplatir, au moins sur un côté, une section initiale d'un tube (2) de section ronde de préférence suivant une première direction de déformation et un second dispositif de formage (15,16) servant à mettre en forme la section du tube suivant une deuxième direction de déformation à peu près parallèle à la première direction de déformation.
Cette installation se **caractérise par le fait qu'**un dispositif de maintien du tube (11,12) et un dispositif d'appui (latéral) (6) sont prévus entre le premier et le second dispositif de formage, dispositifs entre lesquels le tube (2) est engagé après la déformation effectuée suivant la première direction de déformation et **par le fait que** le tube est ajusté, sur son côté aplati, au dispositif de maintien (11,12) et, sur l'autre côté, au dispositif d'appui (6) dont la position est diamétralement opposée à celle du dispositif de maintien - la partie aplatie s'écartant du dispositif de maintien suite au formage du tube suivant la seconde direction de déformation.

23. L'installation selon la spécification n°22 se **caractérise par le fait que** le premier dispositif de formage se compose de deux premiers rouleaux de formage (3) parallèles entre eux.

24. L'installation selon la spécification n°22 se **caractérise par le fait que** la surface latérale (4) de chacun des premiers rouleaux de formage (3) est à peu près celle d'un cylindre.

25. L'installation selon la spécification n°22 à 24 se **caractérise par le fait que** le second dispositif de formage se compose de deux seconds rouleaux de formage (15,16) parallèles entre eux.

26. L'installation selon la spécification n°25 se **caractérise par le fait que** la surface latérale (16) de chacun des seconds rouleaux de formage (15) est à peu près celle d'un cylindre.

27. L'installation selon une des spécifications n°22 à 26 ci-dessus se **caractérise par le fait que** le dispositif de maintien comprend un rouleau (12) servant au maintien du tube.

28. L'installation selon une des spécifications précédentes se **caractérise par le fait que** l'axe (14) du rouleau de maintien (12) est à peu près parallèle aux axes (5) des premiers rouleaux de formage (3).

29. L'installation selon une des spécifications n°27 à 28 se **caractérise par le fait que** le diamètre du rouleau de maintien (12) est supérieur au diamètre des premiers (3) et/ou seconds (15) rouleaux de formage.

30. L'installation selon une des spécifications n°27 à 29 se **caractérise par le fait que** le rouleau de maintien (12) présente un bord convexe (13).

31. L'installation selon la spécification n°30 se **caractérise par le fait que** le bord convexe (13) du rouleau se prolonge sous forme de deux faces parallèles entre elles.

32. L'installation selon une des spécifications n°27 à 31 se **caractérise par le fait que** l'axe (14) du rouleau de maintien et les axes (17) des seconds rouleaux de formage (15) se coupent.

33. L'installation selon une des spécifications n°22 à 32 se **caractérise par le fait que** le dispositif d'appui (6) présente une surface d'appui fixe.

34. L'installation selon la spécification n°33 se **caractérise par le fait que** la surface d'appui est parallèle à la direction d'entraînement du tube (2) et perpendiculaire à la seconde direction de déformation.

35. L'installation selon une des spécifications n°22 à 34 se **caractérise par le fait qu'**un guide (9) servant à maintenir la section aplatie du tube est prévu entre l'un des premiers rouleaux de formage (3) et le dispositif de maintien du tube (11,12) et placé dans le sens d'entraînement.

36. L'installation selon une des spécifications n°22 à 34 se **caractérise par le fait que** deux surfaces de guidage espacées l'une de l'autre sont prévues après les seconds rouleaux de formage (15) et placées dans le sens d'entraînement, surfaces entre lesquelles le tube (2) mis en forme est guidé.
